# EUROPEAN PATENT SPECIFICATION

(11) **EP 0 555 504 B1**
(45) Date of publication and mention of the grant of the patent: **29.12.1997**
(21) Application number: 92102428.7
(22) Date of filing: 13.02.1992
(51) Int. Cl.: C08F 2/08

(54) **Improved non-aqueous dispersions**
Verbesserte nichtwässerige Dispersionen
Dispersions non-aqueuses améliorées

(43) Date of publication of application: 18.08.1993
(73) Proprietor: THE SHERWIN-WILLIAMS COMPANY, Cleveland Ohio 44115-1075 (US)
(72) Inventor: Tomko, Richard F., North Olmsted, Ohio 44070 (US); Rao, Madhukar, Brecksville, Ohio 44141 (US); Sayre, Daniel R., Lowellville, Ohio 44436 (US)
(74) Representative: Abitz, Walter, Dr.-Ing.

(56) References cited:
- US-A- 4 983 716

## Description

### BACKGROUND OF THE INVENTION

Non-aqueous dispersions (NAD's) are well known in the art and typically consist of dispersions of addition polymers in a relatively non-polar non-aqueous liquid containing a steric stabilizing agent having dual affinity to both the dispersing and the dispersed media. For example, U.S. Patent 3,198,759 teaches dispersions of addition polymers in a hydrocarbon medium. The hydrocarbon medium contains one or more aliphatic hydrocarbons containing dissolved therein an alkyd formed by either the direct esterification of a drying oil fatty acid with a dicarboxylic acid and a polyhydric alcohol or the indirect esterification of a drying oil by first alcoholization with a polyhydric alcohol and second esterification with a polybasic acid. European Patent Application 0 310 331 A2 teaches a non-aqueous dispersion of a soluble low molecular weight non-alkyd polymer which is attached or adsorbed onto a second non-soluble alkyd-free polymer. U.S. Patent 4,530,957 teaches non-aqueous dispersions based on crosslinked acrylic polymer particles dispersed in a non-aqueous medium having a polymeric dispersion stabilizer. The polymeric dispersion stabilizer can be an alkyd which is formed by the self condensation of 12-hydroxystearic acid followed by a capping reaction with glycidyl methacrylate. U.S. Patent 4,206,099 teaches non-aqueous dispersions of crosslinked polymer particles in a non-aqueous medium having an amphipathic steric stabilizing agent. The steric stabilizing agent can be a graft copolymer obtained by reacting a low molecular weight carboxyl group terminated condensate of linseed oil fatty acids and 12-hydroxystearic acid with acrylic copolymers. U.S. Patent 3,779,977 teaches non-aqueous dispersions of an acrylonitrile copolymer in a liquid butadiene homopolymer or copolymer in a non-polar organic hydrocarbon liquid.

U.S. Patent 4,983,716 describes in Example 4 the preparation of an NAD by polymerization of methyl methacrylate and hydroxy ethylacrylate in the presence of a chain transfer agent and a specific alkyd that results from an acidolysis reaction and has an Mz of 41,300 and an NVM value of 70.2%.

Previous work of ours has shown that selecting alkyds which have specific properties for use as the steric stabilizing media for an NAD can lead to high solids, low VOC (volatile organic contents) stable NAD's which exhibit acceptable viscosities. In the present invention, we have found a means for producing NAD's which utilize conventional, lower solids alkyds as the steric stabilizing media. Our present NAD's have excellent stability, filterability, gloss, low grit, viscosity and tack-free and dry hard times when formulated as air dry coating compositions. Surprisingly, when produced at the same solids content as the alkyd used to make the NAD's, they exhibit substantially equivalent or lower viscosity than that alkyd. Thus, the potential for lowering the VOC of the coating exists. The NAD's of this invention also air dry faster than the alkyds used to make the NAD.

These NAD's-utilize conventional, traditional alkyds as the dispersing media and steric stabilizer. These NAD's require a specific selection process wherein certain critical parameters, described fully below, must be observed in order to improve the coating.

### SUMMARY OF THE INVENTION

This invention relates to a process for producing improved non-aqueous dispersions (NAD's). The process of this invention produces improved NAD's which comprise a conventional alkyd as the dispersing medium and steric stabilizer for the polymerization product of specific monomers, which polymers are predominantly non-soluble in the alkyd medium.

More specifically, this invention relates to a process for preparing a non-aqueous dispersion of addition polymers in an alkyd medium, wherein said alkyd has a z-average molecular weight of greater than 150,000, and an NVM of less than 70%, and is present in an amount of 35 to 75 wt.%, characterized by polymerizing two or more monomers in the presence of said alkyd via the free radical addition mechanism; wherein at least one of said monomers is selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof; wherein at least one of said monomers has hydroxy-functionality and is present in an amount of 5 to 35 wt.%; and wherein said polymerization is conducted at temperatures between 93.3°C and 121.1°C (200°F and 250°F) in the presence of an initiator selected from organic peroxides and nitriles in an amount of up to 3% by weight and of 0.1 to 6.0 wt.% of a mercaptan compound as a chain transfer agent.

Furthermore, this invention relates to a process for preparing a coating composition comprising a non-aqueous dispersion of addition polymers in an alkyd medium and at least one other paint ingredient or component selected from the groups such as crosslinking agents, catalysts, rheology modifiers, thixotropes, extenders, colors and pigments, solvents, anti-skinning agents, drying agents, dispersants and surfactants, fungicides, mildewcides, preservatives, UV absorbers, anti-marring agents, anti-cratering agents, flow and leveling agents, fragrances, defoaming agents, chelating agents, flattening agents, anti-rusting agents and mixtures thereof; wherein said alkyd has a z-average molecular weight of greater than 150,000, and an NVM of less than 70% and is present in an amount of 35 to 75 wt.%, characterized by polymerizing two or more monomers in the presence of said alkyd via the free radical addition mechanism; wherein at least one of said monomers is selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof; wherein at least one of said monomers has hydroxy-functionality and is present in an amount of 5 to 35 wt.%; and wherein said polymerization is conducted at temperatures between 93.3°C and 121.1°C (200°F and 250°F) in the presence of an initiator selected from organic peroxides and nitriles in an amount of up to 3% by weight and of 0.1 to 6.0 wt.% of a mercaptan compound as a chain transfer agent.

The improved NAD's of this invention are the product of a process which utilizes a conventional alkyd steric stabilizer in the dispersing media, a combination of monomers wherein at least one monomer is selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof, wherein at least one monomer is a hydroxy-functional free radical addition monomer, and wherein the polymerization is conducted in the presence of a chain transfer agent. This yields NAD's which are particularly suited for interior and exterior applications in the architectural, industrial maintenance, and traffic paint and coatings industries.

The process for producing the NAD's of this invention comprises using an alkyd meeting the criteria established herein as the dispersing medium, either alone or in combination with some minor amount of hydrocarbon, aromatic, polar, ketone, ester, or alcohol solvent, or in combination with other minor amounts of other alkyd, modified-alkyd, or hydrocarbon dispersing media, for the polymerization of monomers, which polymers are predominantly insoluble in the alkyd medium. The particular means for the production of the alkyd are not of import to this invention. Thus, the alkyd can be produced according to any of the traditional processes for the production of alkyds which are readily available from the art. However, as a conventional alkyd, the alkyd stabilizer has an Mz of greater than 150,000, an NVM (non-volatile materials) solids content of less than 70%, more preferably of between 40% and 70%, and a viscosity in the above NVM range and at 25 degrees C of no greater than 10,000 mPa·s (cps).

The alkyd serves as the dispersing medium and steric stabilizer for the reaction of free radical addition monomers which produce a polymer which is predominantly insoluble in the alkyd medium. The monomers are polymerized in the presence of the alkyd to produce the novel NAD's of this invention. A critical parameter which must be followed is that at least one monomer must be selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof. A second critical parameter is that at least one monomer must have hydroxy-functionality. A third critical parameter which must be followed is that the polymerization must take place in the presence of a chain transfer agent.

We have found that by following these key critical parameters, explained in more detail below, one can formulate an NAD which is stable, non-gritty, filterable, with a substantially equal or lower viscosity at the same solids level than the alkyd which was used to make the NAD and which dries faster than that alkyd. We have found that failure to follow these key critical parameters when using a conventional alkyd as the dispersing media results in NAD's which do not exhibit the equivalence or improvements in viscosity or dry time vis-a-vis the alkyd used to make them and/or are unstable, gritty, non-filterable or have excessively low conversions.

Accordingly, it is an object of this invention to teach improved non-aqueous dispersions which utilize conventional alkyds as the dispersing media.

It is another object of this invention to teach a non-aqueous dispersion having improved air dry times.

It is a further object of this invention to teach a process for producing non-aqueous dispersions having improved air dry times.

It is a further object of this invention to teach coating compositions containing the non-aqueous dispersions of this invention.

### DETAILED DESCRIPTION OF THE INVENTION

As stated above, the process for producing the NAD's of this invention comprises selecting a conventional alkyd; and using this alkyd as the dispersing medium, either alone or in combination with some minor amount of solvent or other dispersing media, for the polymerization of monomers, which polymers are predominantly insoluble in the alkyd medium. The alkyd used in these NAD's is formed by any of the traditional processes such as fatty acid esterification or alcoholysis of a drying oil with later reaction with a di- or tri- basic acid. The alkyds of this invention are selected from conventional alkyds for the paint and coatings industry. Conventional alkyds are defined herein as alkyds having a z-average molecular weight greater than 150,000, preferably between 250,000 and 1,000,000, and an NVM solids content of less than 70%, preferably between 40% and 70%.

Typical raw materials for the formation of alkyds include triglyceride oils or the fatty acids thereof. These can be selected from the group consisting of linseed oil, soya oil, coconut oil, cottonseed oil, peanut oil, canola oil, corn oil, safflower oil, sunflower oil, dehydrated castor oil, fish oil, perilla, lard, walnut oil, tung oil, tall oil, the fatty acids thereof and mixtures thereof. Particularly preferred are those oils and acids containing unsaturation in the glyceride chains. Particularly preferred are soya oil, dehydrated castor oil and linseed oil and the fatty acids thereof.

Multi-functional alcohols, and mixtures thereof, are also common raw materials for the production of alkyds. One suitable hexafunctional alcohol includes dipentaerythritol. One suitable tetrafunctional alcohol includes pentaerythritol. Suitable trifunctional alcohols include the group consisting of trimethylol propane, trimethylol ethane, glycerine, tris hydroxyethyl isocyanurate, and mixtures thereof, either alone or in combination with a difunctional alcohol selected from the group consisting of ethylene glycol, propylene glycol, cyclohexane dimethanol, and mixtures thereof. Additionally, dimethylol propionic acid can be used in combination with the trifunctional alcohol. Multi) functional alcohols, trifunctional alcohols, and mixtures thereof are particularly preferred due to the degree of branching they allow. Difunctional alcohols, if used, are preferably used as a minor component in combination with trifunctional alcohols. A portion of monofunctional alcohol, or monobasic acid such as soya fatty acid, linseed oil fatty acid, benzoic acid or crotonic acid, up to 20% by weight of the total alkyd can be added with the multifunctional alcohol to control molecular weight and act as a chain stopper.

Another typical raw material used in the formation of alkyds is multi-functional carboxylic acids or anhydrides. Suitable trifunctional carboxylic acids include trimelletic acid, trimesic acid, 1,3,5-pentane tricarboxylic acid, citric acid and others whereas suitable trifunctional anhydrides include trimelletic anhydride, pyromelletic anhydride and others. Difunctional carboxylic acids include phthalic acid, isophthalic acid, terephthalic acid, maleic acid and fumaric acid and mixtures thereof. Mixtures of such acids and anhydrides are also acceptable.

The amounts of oil, acid and alcohol used should be such that the resulting alkyd has a high degree of branching, a z-average molecular weight, M_{z}, greater than 150,000, preferably between 250,000 and 1,000,000. It should be appreciated that the longer these materials are allowed to react, the greater the resultant molecular weight of the alkyd. The alkyd should have an oil length of between 50% and 75%, an acid value less than 20, and a hydroxyl number less than 100, preferably between 40 and 80. The NVM should be below 70%, preferably between 40% and 70%.

If desired, a reaction catalyst such as lithium hydroxide monohydrate, barium hydroxide, or di-butyl tin oxide can be added in an amount of approximately 0.02% by weight of oil.

The NAD's made according to this invention typically have Brookfield LVT #3 (6/12 rpm) viscosities less than 10,000 mPa·s (cps) at 25 degrees C, preferably less than 7,000 mPa·s (cps). They can easily be formulated to have volatile organic contents less than 400 g/l, many times less than 380 g/l, and exhibit excellent air dry times using conventional drier compounds. Interestingly, the NAD's of this invention, at the same solids level, exhibit viscosities substantially equal to or lower than the alkyds used to prepare them. They also have very fast dry times when compared to the alkyds used to prepare them.

As stated above, any conventional alkyd as herein defined can be used in this invention. Particularly suitable commercially available alkyds for use in this invention include the alkyds available from Cargill, Inc. such as 5070 (soya oil alkyd), 5054 (linseed oil alkyd), 5091 (tall oil fatty acid alkyd), 5076 (soya oil in odorless mineral spirits alkyd), and 5074 (isophthalic soya oil alkyd). One particularly preferred alkyd is the reaction product of soya oil, pentaerythritol, maleic anhydride and phthalic anhydride as shown in Example I, below.

When preparing non-aqueous dispersions according to this invention, the monomers should be selected from monomers which would produce a polymer via the free radical addition reaction mechanism, which polymer is predominantly insoluble in the alkyd medium. It is essential that at least one of the monomers be selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof. It is also essential that at least one of the monomers have hydroxy functionality. Between 5% and 35% by weight of the total reactor solids comprises hydroxy functional monomers. Preferably, between 10% and 25% by weight of the total reactor solids comprises a hydroxy functional monomer such as hydroxy ethyl acrylate or hydroxy ethyl methacrylate.

In addition to pure monomers, preformed polymers, polymeric intermediates, multifunctional epoxides, melamines and isocyanates, can be included in the reactor charge.

Most preferred is a combination of methyl methacrylate and hydroxy ethyl acrylate wherein the methyl methacrylate is present in an amount of between 20 and 40%, and the hydroxy ethyl acrylate is present in an amount of between 10 and 25%, by weight of total reactor solids.

Additional monomers selected from the group consisting of hydroxy propyl acrylate and methacrylate, ethyl acrylate and methacrylate, butyl acrylate and methacrylate, lauryl acrylate and methacrylate, trimethylol propane triacrylate and trimethacrylate, hexanediol diacrylate, Tone M-100 (caprolactone modified hydroxy ethyl acrylate), polyethylene oxide acrylate and methacrylate, polypropylene oxide acrylate and methacrylate, allyl alcohol, can be included in the reactor charge in relatively minor amounts, so long as they are not added in percentages sufficient to adversely affect the viscosity and/or odor of the NAD. Certain monomers are to be avoided such as styrene because of an unacceptable resultant increase in NAD viscosity. Also to be avoided are divinyl benzene, vinyl naphthalene, and vinyl toluene because these are generally soluble in alkyds. Vinyl acetate is unacceptable for inclusion as it does not polymerize under the conditions taught herein. These monomers have been found to contribute to a decrease in yield, additional grit, and/or a lessening of stability over time.

To prepare the NAD's of this invention, the alkyd dispersing medium is used as the polymerization medium for the monomer charge. The alkyd medium can be diluted with mineral spirits or other solvent if desired, with the primary limitation being concern for the VOC of the composition and the viscosity increase which accompanies the swelling and solubilization of the dispersed phase in stronger solvents.

The total amount of alkyd contained in the reaction vessel, including any alkyd which may be added with the monomer charge, comprises between 35% to 75%, preferably from 40% to 60%, by weight of the total reactor solids. The free radical addition monomer charge should, after completely added to the reaction vessel, account for 65% to 25%, preferably between 60% to 40%, by weight of the total reactor solids.

A mercaptan-containing chain transfer agent such as methyl mercaptopropionate, dodecyl mercaptan, thioglycolic acid, or 2-mercapto ethanol must also be added to the vessel in an amount from 0.1% to 6.0% by weight of total reactor solids. Most preferred is 2-mercapto ethanol.

An initiator which will not oxidize the chain transfer agent is selected from the group consisting of organic peroxides such as benzoyl peroxide, lauroyl peroxide, di-t-butyl peroxide, acetyl peroxide, t-butyl peroctoate, t-amyl peroctoate, and t-butyl perbenzoate, or selected from the group consisting of nitrile initiators such as a,a'-azobisisobutyronitrile, and mixtures thereof and is also added in an amount up to 3% by weight of the total monomer charge.

All free radical addition reactants are preferably added via dropwise addition over a period of time to the alkyd dispersing medium. The monomer charge can be added pure, or, in a preferred embodiment, the monomers can be dispersed in an amount of the alkyd prior to addition to the dispersing medium. The amount of alkyd used for such a dispersion should be included in the calculation of the overall amount of alkyd present in the reaction vessel. Any additional ingredients such as acrylic polymers and copolymers, macromonomers, silicones, XI-100 from Monsanto (poly allyl glycidyl ether), alkyds, uralkyds, urethane-modified oils, polyesters, and epoxy esters can be included in the reactor charge provided they are solubilized in either the monomer charge or the alkyd dispersing media.

The temperature of the contents of the reaction vessel should be maintained between 93.3°C and 121.1°C (200°F and 250°F) for the entire period that monomer charge is being added. A nitrogen blanket is also highly preferred. Upon completion of the monomer addition, up to 0.1% by weight of total reactor charge an activator selected from the group consisting of the iron, copper, vanadium, cobalt and manganese naphthenates, octoates, hexanates and isodecanoates is added to the reactor vessel and from 0.5% to 5.0% by weight of total reactor solids of a hydroperoxide chaser composition selected from the group consisting of cumene hydroperoxide, t-butyl hydroperoxide, t-amyl hydroperoxide, and the like is added dropwise over a period of 90 minutes. The hydroperoxide chasers are preferred because they oxidize the remaining mercaptan from the chain transfer agent and thus eliminate the odor from the sulfur. Upon completion of the chase, the temperature should be maintained between 93.3°C and 121.1°C (200°F and 250°F) for approximately one hour. At the end of that hour, the heat is removed and the contents of the vessel are filtered.

The non-aqueous dispersions of this invention can be used alone as coating compositions. Or, they can be blended or used in combination with other alkyds or NAD's. They can be combined with other film-forming compositions such as acrylic polymers and copolymers, macromonomers, silicone alkyds, XI-100 from Monsanto, alkyds, uralkyds, urethane-modified oils, polyesters, epoxy esters, polybutadiene, and polyallyl glycidyl ether. They can be formulated with other readily available, standard paint ingredients and components such as crosslinking agents, catalysts, rheology modifiers, thixotropes, extenders, colors and pigments, solvents, anti-skinning agents, drying agents, dispersants and surfactants, fungicides, mildewcides, preservatives, UV absorbers, anti-marring agents, anti-cratering agents, flow and leveling agents, fragrances, defoaming agents, chelating agents, flattening agents, and anti-rusting agents.

Suitable rheology modifiers are well known in the art and can comprise organoclays, fumed silica, dehydrated castor oil organic derivatives (exemplary tradenames: Thixatrol (R), NL Industries; Flowtone (R), English China Clay), polyamides, polyamide modified alkyds, MPSA-60, Rheox, alkylbenzene sulphonate derivatives, aluminum, calcium and zinc stearates and calcium soyate.

Suitable extenders are also well known in the art and can comprise amorphous, diatomaceous, fumed, quartz and crystalline silica, clays, aluminum silicates, magnesium aluminum silicates, talc, mica, delaminated clays, calcium carbonates and silicates, gypsum, barium sulfate, zinc, calcium zinc molybdates, zinc oxide, phosphosilicates and borosilicates of calcium, barium and strontium and barium metaborate monohydrate.

Suitable colors and pigments are well known in the art and can comprise for example, titanium dioxide, carbon black, graphite, ceramic black, antimony sulfide, black iron oxide, aluminum pastes, yellow iron oxide, red iron oxide, iron blue, phthalo blue, nickel titanate, dianisidine orange, dinitroaniline orange, imidazole orange, quinacridone red, violet and magenta, toluidine red, and molybdate orange.

Suitable solvents can comprise propylene and ethylene glycol ethers and acetates, alcohols, ketones, aliphatic and aromatic hydrocarbons and naphthas, petroleum and wood distillates, turpentine and pine oil. Solvent selection is limited primarily by the desire to maintain the overall VOC level of the coating composition as low as possible without resulting in an unacceptable increase in viscosity.

Anti-skinning agents such as methyl ethyl ketoxime, o-cresol, and hydroquinone can be included.

Drying agents can comprise standard metallic and rare earth driers such as cobalt, calcium, potassium, barium, zinc, manganese, tin, aluminum, zirconium and vanadium napthenates, octoates, hexanates, and isodecanoates. A particularly preferred drier composition is a combination of cobalt, calcium and zirconium driers present in an amount from 0.1% to 2.5% by weight of the coating composition.

Suitable dispersants and surfactants can comprise any of the readily available dispersants and surfactants to the coatings industry, including the anionic and nonionic surfactants, soya lecithin, alkyl ammonium salts of fatty acids, amine salts of alkyl aryl sulfonates, unsaturated organic acids, sulfonated castor oil, mixtures of high boiling point aromatic and ester solvents, sodium salts of aryl sulfonic acid and Solsperse from ICI.

The following examples will demonstrate various embodiments of this invention.

### EXAMPLE I: PREPARATION OF ALKYD

Charge a reactor equipped with inert gas, mechanical stirrer, and condenser with 1176.05 kg (2591 lbs) alkali refined soybean oil and 341.56 kg (753-lbs) of pentaerythritol. Heat to 248.9°C (400 degrees F) under inert gas blanket. Add 2.31 kg (5.1 lbs) of lithium hydroxide catalyst and heat to 243.3°C (470 degrees F). Hold for approximately two hours until clear. Add 1133 lbs of soybean oil and cool to 198.9°C (390 degrees F). Add 12.7 kg (28 lbs) of maleic anhydride, 623.7 kg (1375 lbs) of phthalic anhydride and 65.32 kg (144 lbs) of xylene. Heat to 254.4°C (490 degrees F) and hold for a viscosity of Z-Z2 using the Gardner-Holdt method and an acid value of less than about 10 at 70% NVM in mineral spirits. Cut with 1043.28 kg (2300 lbs) of mineral spirits to produce a 70% NVM alkyd.

The resulting alkyd should have an Mz of between 250,000 to 1,000,000, an NVM of 70% and a viscosity of 5700 to 5900 mPa·s (cps) at 25 degrees C.

The following procedure was used to make the NAD's of Examples A through H from the alkyd of Example I:

Charge about 1/2 of the alkyd to a reactor equipped with a mechanical stirrer. Heat to 100°C. Disperse the monomer/chain transfer agent solution in the remainder of the alkyd along with an initiator solution comprising t-butyl peroctoate and begin a three hour dropwise addition of the solution to the reactor. Upon completion of the addition of the solutions, hold for approximately one hour and then add vanadium naphthenate to the reactor. Begin a 90 minute addition of a "chase" comprising mineral spirits and cumene hydroperoxide. Hold the temperature at 100°C for approximately ½ to 1 hour after the chase has been completely added. Shut off heat and filter the contents of the reactor through a 15 µm polyester filter bag.

The following NAD's were made according to the above procedure (parts by weight) , with the following properties resulting therefrom. The Hegman scale is used to measure the level of grittiness of the NAD prior to filtration, with a value of "8" representing no grit and a value of "0" representing all grit. Viscosities were measured using the Brookfield Viscometer LVT #3 spindle at 12 rpm.

| EXAMPLE A | |
|---|---|
| 50 parts | alkyd |
| 35 parts | methyl methacrylate |
| 15 parts | hydroxy ethyl acrylate |
| 0.28 parts | 2-mercapto ethanol |
| | |
| NVM: | 69.1% |
| Visc: | 2850 mPa·s (cps) |
| Hegman: | 8 |

| EXAMPLE B | |
|---|---|
| 50 parts | alkyd |
| 50 parts | methyl methacrylate |
| 0 parts | OH-functional monomer |
| 0.28 parts | 2-mercapto ethanol |
| | |
| NVM: | 71.0% |
| Visc: | 186,000 mPa·s (cps) |
| Hegman: | 2 |

| EXAMPLE C | |
|---|---|
| 50 parts | alkyd |
| 35 parts | methyl methacrylate |
| 15 parts | hydroxy ethyl acrylate |
| 0 parts | chain transfer agent |
| | |
| NVM: | 68.3% |
| Visc: | 2000 mPa·s (cps) |
| Hegman: | 2 |

| EXAMPLE D | |
|---|---|
| 50 parts | alkyd |
| 50 parts | methyl methacrylate |
| 0 parts | OH-functional monomer |
| 0 parts | chain transfer agent |
| | |
| NVM: | 67.1% |
| Visc: | 15,800 mPa·s (cps) |
| Hegman: | 1 |

| EXAMPLE E | |
|---|---|
| 50 parts | alkyd |
| 0 parts | methyl methacrylate |
| 50 parts | hydroxy ethyl methacrylate |
| 0.28 parts | chain transfer agent |
| NVM: | 71.5% |
| Visc: | 10,400 mPa·s (cps) |
| Hegman: | 8 |

| EXAMPLE F | |
|---|---|
| 50 parts | alkyd |
| 35 parts | methyl methacrylate |
| 15 parts | ethyl acrylate |
| 0 parts | OH-functional monomer |
| 0.28 parts | chain transfer agent |
| | |
| Result: | Paste |

| EXAMPLE G | |
|---|---|
| 50 parts | alkyd |
| 45 parts | methyl methacrylate |
| 5 parts | acrylic acid |
| 0 parts | OH-functional monomer |
| 0.28 parts | chain transfer agent |
| | |
| NVM: | 69.0% |
| Visc: | 7,000 mPa·s (cps) |
| Hegman: | 8 |

| EXAMPLE H | |
|---|---|
| 50 parts | alkyd |
| 35 parts | methyl methacrylate |
| 15 parts | styrene |
| 0 parts | OH-functional monomer |
| 0.28 parts | chain transfer agent |
| | |
| NVM: | 67.7% |
| Visc: | 18,300 mPa·s (cps) |
| Hegman: | 4.5 |

Paint compositions were made from the alkyd of Example I and from the NAD of Example A as follows:

### EXAMPLE II--PAINT CONTAINING ALKYD OF EXAMPLE I

Add 111.688 kg (246.23 lbs) of alkyd from Example I to a mixing vessel. Begin the grind phase by adding 5.162 kg (11.38 lbs) of aliphatic naptha and 1.651 kg (3.64 lbs) of soya lecithin. Start the mill and add 50.575 kg (111.50 lbs) of rutile titanium dioxide and 2.268 kg (5.00 lbs) of organophilic clay. Run on high for 15 minutes. Reduce the speed of the mill and stabilize with 20.502 kg (45.20 lbs) of aliphatic naptha and 13.376 kg (29.49 lbs) of alkyd from Example I. Add 0.290 kg (0.64 lbs) 12% cobalt catalyst, 1.737 kg (3.83 lbs) 18% zirconium 2-ethylhexanoate and 0.626 kg (1.38 lbs) 10% calcium driers. Add 0.454 kg (1.00 lbs) of methyl ethyl ketoxime and 5.325 kg (11.74 lbs) of aliphatic naptha.

The resultant paint has KU and ICI viscosities at 25 degrees C of 80 and 4.4, respectively. The "dry-to-set" time, as measured by the Byk-Gardner circular drytime recorder, at 25 degrees C and 50% relative humidity, is approximately 2.5 hours. The "surface-dry" time, as measured the same instrument under the same conditions is approximately 2.25 hours. The "thru-dry" time, as measured by the same instrument under the same conditions is greater than 12 hours. The "dry-hard" time, as measured by the same instrument under the same conditions is greater than 12 hours.

### EXAMPLE III--PAINT CONTAINING NAD OF EXAMPLE A

Add 133.764 kg (294.90 lbs) of an NAD (composition of 45 parts by weight alkyd of Example I, 40 parts methyl methacrylate, 15 parts hydroxy ethyl acrylate and 0.28 parts 2-mercapto ethanol, produced according to the procedure used for Examples A-H, above) to a mixing vessel. Begin the grind phase by adding 9.730 kg (21.45 lbs) of aliphatic naptha and 3.302 kg (7.28 lbs) of soya lecithin. Start the mill and add 101.151 kg (223.00 lbs) of rutile titanium dioxide and 4.536 kg (10.00 lbs) of organophilic clay. Run on high for 15 minutes. Reduce the speed of the mill and stabilize with 49.446 kg (109.01 lbs) of aliphatic naptha and 118.292 kg (260.79 lbs) of NAD. Add 0.417 kg (0.92 lbs) 12% cobalt catalyst and 4.164 kg (9.18 lbs) 10% calcium driers. Add 0.907 kg (2.00 lbs) of methyl ethyl ketoxime and 10.646 kg (23.47 lbs) of aliphatic naptha.

The resultant paint has KU and ICI viscosities at 25 degrees C of 86 and 2.7, respectively. The "dry-to-set" time, as measured by the Byk-Gardner circular drytime recorder, at 25 degrees C and 50% relative humidity, is approximately 0.75 hours. The "surface-dry" time, as measured the same instrument under the same conditions is approximately 1.0 hours. The "thru-dry" time, as measured by the same instrument under the same conditions is approximately 1.5 hours. The "dry-hard" time, as measured by the same instrument under the same conditions is approximately 3.5.

## Claims

1. A process for preparing a non-aqueous dispersion of addition polymers in an alkyd medium, wherein said alkyd has a z-average molecular weight of greater than 150,000, and an NVM of less than 70%, and is present in an amount of 35 to 75 wt.%, characterized by polymerizing two or more monomers in the presence of said alkyd via the free radical addition mechanism; wherein at least one of said monomers is selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof; wherein at least one of said monomers has hydroxy-functionality and is present in an amount of 5 to 35 wt.%; and wherein said polymerization is conducted at temperatures between 93.3°C and 121.1°C (200°F and 250°F) in the presence of an initiator selected from organic peroxides and nitriles in an amount of up to 3% by weight and of 0.1 to 6.0 wt.% of a mercaptan compound as a chain transfer agent.

2. The process of Claim 1 characterized in that said hydroxy functional monomer is selected from the group consisting of hydroxy ethyl acrylate and hydroxy ethyl methacrylate, and mixtures thereof.

3. The process of Claim 2 characterized in that said monomer charge comprises methyl methacrylate and hydroxy ethyl acrylate.

4. The process of Claim 3 characterized in that said chain transfer agent is selected from the group consisting of methyl mercaptopropionate, dodecyl mercaptan and 2-mercapto ethanol.

5. A process for preparing a coating composition comprising a non-aqueous dispersion of addition polymers in an alkyd medium and at least one other paint ingredient or component selected from the groups such as crosslinking agents, catalysts, rheology modifiers, thixotropes, extenders, colors and pigments, solvents, anti-skinning agents, drying agents, dispersants and surfactants, fungicides, mildewcides, preservatives, UV absorbers, anti-marring agents, anti-cratering agents, flow and leveling agents, fragrances, defoaming agents, chelating agents, flattening agents, anti-rusting agents and mixtures thereof; wherein said alkyd has a z-average molecular weight of greater than 150,000, and an NVM of less than 70% and is present in an amount of 35 to 75 wt.%, characterized by polymerizing two or more monomers in the presence of said alkyd via the free radical addition mechanism; wherein at least one of said monomers is selected from the group consisting of acrylonitrile, methacrylonitrile, hydroxy ethyl acrylate and methacrylate, methyl acrylate and methacrylate, acrylamide, methacrylamide, vinyl chloride, vinylidene chloride, acrylic acid, methacrylic acid, itaconic acid, maleic acid, fumaric acid, the methyl esters of itaconic, maleic and fumaric acid, and mixtures thereof; wherein at least one of said monomers has hydroxy-functionality and is present in an amount of 5 to 35 wt.%; and wherein said polymerization is conducted at temperatures between 93.3°C and 121.1°C (200°F and 250°F) in the presence of an initiator selected from organic peroxides and nitriles in an amount of up to 3% by weight and of 0.1 to 6.0 wt.% of a mercaptan compound as a chain transfer agent.

## Revendications

1. Procédé de préparation d'une dispersion non aqueuse de polymères d'addition dans un milieu d'alkyde, dans lequel ledit alkyde a une masse moléculaire moyenne z de plus de 150.000 et une MNV de moins de 70%, et il est présent en une quantité de 35 à 75% en poids, caractérisé par la polymérisation de deux ou plusieurs monomères en présence dudit alkyde via le mécanisme d'addition radicalaire ; dans lequel au moins un desdits monomères est choisi parmi les acrylonitrile, méthacrylonitrile, acrylate et méthacrylate d'hydroxyéthyle, acrylate et méthacrylate de méthyle, acrylamide, méthacrylamide, chlorure de vinyle, chlorure de vinylidène, acide acrylique, acide méthacrylique, acide itaconique, acide maléique, acide fumarique, les esters méthyliques des acides itaconique, maléique et fumarique, et leurs mélanges ; dans lequel au moins un desdits monomères a une fonctionnalité hydroxy et est présent en une quantité de 5 à 35% en poids et dans lequel ladite polymérisation est effectuée à des températures entre 93,3°C et 121,1°C (200°F et 250°F) en présence d'un amorceur choisi parmi les peroxydes organiques et les nitriles en une quantité allant jusqu'à 3% en poids et de 0,1 à 6,0% en poids d'un composé mercaptan à titre d'agent de transfert de chaîne.

2. Procédé selon la revendication 1, caractérisé en ce que ledit monomère hydroxy fonctionnel est choisi parmi les acrylate d'hydroxyéthyle et méthacrylate d'hydroxyéthyle et leurs mélanges.

3. Procédé selon la revendication 2, caractérisé en ce que ladite charge de monomère comprend un méthacrylate de méthyle et un acrylate d'hydroxyéthyle.

4. Procédé selon la revendication 3, caractérisé en ce que ledit agent de transfert de chaîne est choisi parmi les mercaptopropionate de méthyle, dodécylmercaptan et 2-mercapto-éthanol.

5. Procédé de préparation d'une composition d'enrobage comprenant une dispersion non aqueuse de polymères d'addition dans un milieu d'alkyde et au moins un autre ingrédient de peinture (ou composant) choisi parmi les agents réticulants, les catalyseurs, les modificateurs de la rhéologie, les thixotropes, les agents d'allongement, les colorants et les pigments, les solvants, les agents antipelliculaires, les agents siccatifs, les dispersants et les tensioactifs, les fongicides, les agents anti-moisissures, les conservateurs, les absorbants des UV, les agents d'anti-altération, les agents d'anti-affaissement, les agents d'écoulement et de nivellement, les parfums, les agents de démoussage, les agents chélateurs, les agents d'aplatissement, les agents antirouille et leurs mélanges ; dans lequel ledit alkyde a une masse moléculaire moyenne z de plus de 150.000 et une MNV de moins de 70%, et il est présent en une quantité de 35 à 75% en poids, caractérisé par la polymérisation de deux ou plusieurs monomères en présence dudit alkyde via le mécanisme d'addition radicalaire ; dans lequel au moins un desdits monomères est choisi parmi les acrylonitrile, méthacrylonitrile, acrylate et méthacrylate d'hydroxyéthyle, acrylate et méthacrylate de méthyle, acrylamide, méthacrylamide, chlorure de vinyle, chlorure de vinylidène, acide acrylique, acide méthacrylique, acide itaconique, acide maléique, acide fumarique, les esters méthyliques des acides itaconique, maléique et fumarique, et leurs mélanges ; dans lequel au moins un desdits monomères a une fonctionnalité hydroxy et est présent en une quantité de 5 à 35% en poids et dans lequel ladite polymérisation est effectuée à des températures entre 93,3°C et 121,1°C (200°F et 250°F) en présence d'un amorceur choisi parmi les peroxydes organiques et les nitriles en une quantité allant jusqu'à 3% en poids et de 0,1 à 6,0% en poids d'un composé mercaptan à titre d'agent de transfert de chaîne.

## Patentansprüche

1. Verfahren zur Herstellung einer nicht-wäßrigen Dispersion von Additionspolymeren in einem Alkydmedium, wobei das Alkyd ein z-durchschnittliches Molekulargewicht von mehr als 150.000 und einen NVM-Wert von weniger als 70 % aufweist und in einer Menge von 35 bis 75 Gew.-% anwesend ist, dadurch gekennzeichnet, daß man zwei oder mehr Polymere in Gegenwart des Alkyds mittels des freiradikalischen Additionsmechanismus polymerisiert; wobei wenigstens eines der Monomeren ausgewählt ist aus der Gruppe bestehend aus Acrylnitril, Methacrylnitril, Hydroxyethylacrylat und methacrylat, Methylacrylat und -methacrylat, Acrylamid, Methacrylamid, Vinylchlorid, Vinylidenchlorid, Acrylsäure, Methacrylsäure, Itaconsäure, Maleinsäure, Fumarsäure, den Methylestern der Itaconsäure, Maleinsäure und Fumarsäure, und Mischungen von diesen; wobei wenigstens eines der Monomeren Hydroxyfunktionalität aufweist und in einer Menge von 5 bis 35 Gew.-% anwesend ist; und wobei die Polymerisation bei Temperaturen zwischen 93,3°C und 121,1°C (200°F und 250°F) in Gegenwart eines Initiators, ausgewählt unter organischen Peroxiden und Nitrilen in einer Menge von bis zu 3 Gew.-%, und 0,1 bis 6,0 Gew.-% einer Mercaptanverbindung als Kettenübertragungsmittel durchgeführt wird.

2. Verfahren nach Anspruch 1, dadurch gekennzeichnet, daß das hydroxyfunktionelle Monomere ausgewählt wird aus der Gruppe bestehend aus Hydroxyethylacrylat und Hydroxyethylmethacrylat sowie Mischungen von diesen.

3. Verfahren nach Anspruch 2, dadurch gekennzeichnet, daß die Monomerenbeschickung Methylmethacrylat und Hydroxyethylacrylat umfaßt.

4. Verfahren nach Anspruch 3, dadurch gekennzeichnet, daß das Kettenübertragungsmittel ausgewählt wird aus der Gruppe bestehend aus Methylmercaptopropionat, Dodecylmercaptan und 2-Mercaptoethanol.

5. Verfahren zur Herstellung einer Überzugszusammensetzung, umfassend eine nicht-wäßrige Dispersion von Additionspolymeren in einem Alkydmedium und wenigstens einem anderen Anstrichfarbenbestandteil oder einer anderen Anstrichfarbenkomponente, ausgewählt aus beispielsweise den Gruppen Vernetzungsmitteln, Katalysatoren, Rheologiemodifizierungsmitteln, thixotropen Zusatzstoffen, Verlängerungsmitteln, Farbstoffen und Pigmenten, Lösungsmitteln, Antihautbildungsmitteln, Trocknungsmitteln, Dispergierungsmitteln und oberflächenaktiven Mitteln, Fungiziden, Schimmelschutzmitteln, Konservierungsmitteln, UV-Absorbierungsmitteln, Antikratzbildungsmitteln, Antikraterbildungsmitteln, Fließ- und Ausgleichsmitteln, Duftstoffen, Entschäumungsmitteln, Gelierungsmitteln, Abflachmitteln, Antirostbildungsmitteln und Mischungen von diesen; wobei das Alkyd ein z-durchschnittliches Molekulargewicht von mehr als 150.000 und einen NVM-Wert von weniger als 70 % aufweist und in einer Menge von 35 bis 75 Gew.-% anwesend ist, dadurch gekennzeichnet, daß man zwei oder mehr Polymere in Gegenwart des Alkyds mittels des freiradikalischen Additionsmechanismus polymerisiert; wobei wenigstens eines der Monomeren ausgewählt ist aus der Gruppe bestehend aus Acrylnitril, Methacrylnitril, Hydroxyethylacrylat und - methacrylat, Methylacrylat und -methacrylat, Acrylamid, Methacrylamid, Vinylchlorid, Vinylidenchlorid, Acrylsäure, Methacrylsäure, Itaconsäure, Maleinsäure, Fumarsäure, den Methylestern der Itaconsäure, Maleinsäure und Fumarsäure, und Mischungen von diesen; wobei wenigstens eines der Monomeren Hydroxyfunktionalität aufweist und in einer Menge von 5 bis 35 Gew.-% anwesend ist; und wobei die Polymerisation bei Temperaturen zwischen 93,3°C und 121,1°C (200°F und 250°F) in Gegenwart eines Initiators, ausgewählt unter organischen Peroxiden und Nitrilen in einer Menge von bis zu 3 Gew.-%, und 0,1 bis 6,0 Gew.-% einer Mercaptanverbindung als Kettenübertragungsmittel durchgeführt wird.
